# EUROPEAN PATENT APPLICATION

(11) **EP 4 745 531 A1**
(43) Date of publication of application: **20.05.2026**
(21) Application number: 25215086.7
(22) Date of filing: 11.11.2025
(51) Int. Cl.: G01D 7/00, G01D 11/28, G01D 13/00, F16K 37/00

(54) **MULTIFUNCTIONAL DISPLAY ELEMENT**

(30) Priority: 13.11.2024 EP 24212720
(71) Applicant: Pepperl+Fuchs SE, 68307 Mannheim (DE)
(72) Inventor: GEIPEL, Hannes, 10961 Berlin (DE); GEIPEL, Jörg, 15374 Müncheberg (DE)
(74) Representative: Tergau & Walkenhorst Intellectual Property GmbH

(57) **Abstract**

A sensor for detecting an angular position of an actuator, comprising a device for displaying a sensor function, particularly the detected sensor value, wherein the device has at least one display that is configured to display the sensor function using at least a first light source and at least a second light source.

## Description

### Technical Field

The present invention relates to a sensor for detecting an angular position of a swivel actuator, a swivel actuator with such sensor, and a method for detecting an angular position of a swivel actuator and displaying a sensor function with such sensor.

### Background

In the field of industrial automation and control systems, precise detection and display of the angular position of swivel actuators are critical for ensuring accurate operation and monitoring. Actuators are widely used in various applications, including valve control, robotics, and machinery, where precise positioning is essential for optimal performance.

Sensors of this type are state-of-the-art and are used in valve actuators or control devices for flowing substances to detect the valve position. The angular position is transmitted to the sensor via an actuator mounted on the end of the shaft. The actuator has an interface at one end of the shaft for mounting sensors or controllers. Today, many display devices are rather simple and mechanically indicate the valve position in a binary form, i.e. indicating that the valve is "open" or "closed".

Little more advanced solutions often use an illuminated display that offer the similar binary information, for example, by integration of a single centrally coupled LED. Accordingly, the information that can be displayed is respectively narrow and simple.

More complex existing solutions may also require complex integration processes, involving multiple components and intricate wiring, which can be time-consuming and prone to errors. Thus, simplifying the integration process is a significant challenge.

Also, the display of sensor functions, particularly in harsh industrial environments, can be difficult to read and interpret. Ensuring that the sensor values are clearly visible and easily understood by operators is crucial for effective monitoring and control.

These challenges highlight the need for an improved sensor that can accurately detect and display the sensor functions, such as a more specific display of the position of swivel actuators, simplify integration, enhance visibility, and offer greater versatility and control.

### Summary

It is an object of the present invention to provide a sensor that can accurately detect and display the angular position of swivel actuators, ensuring precise operation and monitoring.

It is a further object of the present invention to provide a sensor that simplifies the integration process, reducing the complexity and potential for errors associated with multiple components and intricate wiring.

It is also an object of the present invention to enhance the visibility and interpretability of sensor functions, particularly in harsh industrial environments, ensuring that sensor values are clearly visible and easily understood by operators.

These and other problems are solved by the subject matter of the attached independent claims.

The above objects of the invention are achieved by the subject-matter of the attached independent claims.

Preferred embodiments may be taken from the dependent claims, and, beyond that, from the following description, in particular comprising various embodiments as covered and described in the annexed claims.

In a first aspect, the present invention relates to a sensor for detecting an angular position of a swivel actuator. Such sensor according to the present invention comprises a device for displaying a sensor function, particularly the detected sensor value, wherein the device has at least one display that is configured to display the sensor function using at least a first light source and at least a second light source.

In a second aspect, the present invention relates to a swivel actuator comprising such sensor according to the first aspect of the present invention.

In a third aspect, the present invention relates to a method for detecting an angular position of a swivel actuator and displaying a sensor function with a sensor comprising at least the following steps:
- a step of detecting a sensor value, preferably a current angular position of a swivel actuator;
- a step of processing the detected sensor value and deriving a sensor function from processing the detected sensor value,
- a step of transmitting the sensor function of the detected sensor value, preferably by means of an actuator mounted on an actuator shaft;
- a step of initiating a light signal from at least a first light source and/or a second light source to an display of the device to display the sensor function, preferably the detected sensor value, on the display, wherein the sensor is preferably a sensor according to the first aspect of the present invention.

In relation to the method of the present invention, it shall be noted, that the steps given above do not necessarily have to be carried out in the given order. The provided steps may be carried out in any other suitable order.

However, the order as given above may apply for particular variants of the method. For example, transmitting the sensor function of the detected sensor value, may be done before initiating a light signal from at least a first light source, so that the logic applies to first have the data and then visualize and display the data.

It will be immediately acknowledged by a person skilled in the art that a feature, embodiment, effect or advantage described herein in connection with the inventive sensor or swivel actuator, may also be a feature, embodiment, effect or advantage of the inventive method, respectively, and vice versa.

With the different aspects of the present invention, the present invention is of particular advantage, as it allows for a more precise and reliable detection and display of the angular position of swivel actuators. By utilizing at least a first light source and a second light source, the sensor can provide a clear and distinct visualization of the sensor function, particularly the detected sensor value. This dual-light source configuration enhances the visibility and interpretability of the displayed information, making it easier for operators to monitor and control the system accurately.

Additionally, the use of multiple light sources can improve the sensor's adaptability to various environmental conditions and operational requirements, ensuring consistent performance across different applications. This innovation addresses the limitations of traditional sensors and offers a more versatile and user-friendly solution for industrial automation and control systems.

The term "angular position" as used herein preferably refers to the measurement of the angle in degrees that indicates the orientation of an actuator or component.

This measurement is typically expressed in degrees and provides a precise indication of the current position within a rotational range. It is important to note that the term "angular position" as used herein, preferably is not limited to end positions such as fully open or fully closed (0 and 90 degrees). Instead, the term "angular position" preferably encompasses a broader range of angles, allowing for the detection and display of various intermediate positions beyond just the endpoints. In other words, preferably at least one further angle between the fully open and fully closed positions (0 and 90 degrees) indicated.

The inventive device can be embedded in a sensor housing. This housing may advantageously be made of a transparent or translucent material, allowing for externally visible light coupling or displays. The housing can be otherwise tightly enclosed by an opaque housing wall, ensuring protection and durability.

The light sources used may be manifold, such as LEDs or OLEDs, that can be either monochromatic or multi-coloured, providing flexibility in display options.

The multifunctional nature of the inventive sensor, lies in the device and its display element. The present sensor thus is able not only to detect, rather than also display the sensor function, such as the main sensor function, e.g. a valve position. However, the present invention is not restricted to only display said main sensor function. Instead, various sensor functions may advantageously displayed - in parallel, alternatingly or alternatively to each other. Such sensor functions may comprise the detected sensor value, particularly an open/clos information of a valve, an angular position of a swivel actuator, a clock for timing functions, a confirmation light to indicate successful operations, or a fault indicator to alert operators to issues, or the like. This multifunctionality enhances the sensor's utility and adaptability in various industrial applications, making it a versatile tool for precise monitoring and control.

Throughout this specification and the claims which follow, unless the context requires otherwise, the word "comprise", and variations such as "comprises" and "comprising", will be understood to imply the inclusion of a stated member, integer or step or group of members, integers or steps but not the exclusion of any other member, integer or step or group of members, integers or steps although in some embodiments such other member, integer or step or group of members, integers or steps may be excluded, i.e. the subject-matter consists in the inclusion of a stated member, integer or step or group of members, integers or steps. The terms "a" and "an" and "the" and similar reference used in the context of describing the invention (especially in the context of the claims) are to be construed to cover both the singular and the plural, unless otherwise indicated herein or clearly contradicted by context. Recitation of ranges of values herein is merely intended to serve as a shorthand method of referring individually to each separate value falling within the range. Unless otherwise indicated herein, each individual value is incorporated into the specification as if it were individually recited herein.

Within the present application, terms such as "lateral" or "laterally", "rear", "frontal", "upper", "lower", "bottom", "opposite", "inner", "outer" or the like, as used herein, which describe the position of a first object relative to another object, preferably refer to the relative position of a respective part or object with regard to its position fully mounted for its intended use.

In an advantageous embodiment of the inventive sensor or method, the sensor function is the detected sensor value, preferably the angular position of the swivel actuator.

This is of particular advantage, in that it ensures the sensor function directly corresponds to the detected sensor value, providing precise and reliable information about the angular position of the swivel actuator. By focusing on the detected sensor value, preferably the angular position, the sensor can deliver accurate real-time data, which is crucial for effective monitoring and control in industrial applications. This direct correlation enhances the overall performance and reliability of the system, reducing the likelihood of errors and improving operational efficiency. Additionally, it simplifies the interpretation of sensor data, making it easier for operators to understand and act upon the information provided.

In a further advantageous embodiment of the inventive sensor or method, the sensor comprises an actuator mounted on the actuator shaft for transmitting the angular position.

This is of particular advantage, in that it allows for the precise and efficient transmission of the angular position from the actuator to the sensor. By having the actuator mounted directly on the actuator shaft, the sensor can accurately capture the angular position without the need for additional intermediary components, which could introduce errors or delays. This direct mounting configuration enhances the reliability and accuracy of the sensor readings, ensuring that the detected angular position is a true reflection of the swivel actuator's state.

Furthermore, this setup simplifies the overall design and integration process, reducing the complexity and potential points of failure, thereby improving the robustness and maintainability of the system.

The display device may include the display in the form of a bar display, an LCD display, or an LED display that shows the sensor value, for example, in numerical form or as a bar. These display methods provide a precise indication of the sensor value; however, the geometric position of the valve may not be immediately apparent.

In a further advantageous embodiment of the inventive sensor or method, the light sources are substantially arranged radially around the rotational axis of the actuator. Additionally, or alternatively the device, preferably the display, has a circular, ring-shaped, or partially circular geometry, or any arrangement around the rotational axis of the actuator.

The skilled person will immediately acknowledge that the geometry and shape of the device, of course may have various forms and other geometries than circular and/or ring-shaped. For example, in general, the display contour may follow the overall housing geometry to provide an attractive display of information.

Particularly, ring-shaped geometry as used herein, preferably also includes a path that appears nearly closed and comprises straight lines, but does not necessarily have to be fully closed. Thus, a polygon may also be encompassed by the term "ring-shaped geometry".

However, the device, preferably the display, having a circular and/or ring-shaped geometry, is of particular advantage, in that a circular and/or ring-shaped geometry for the display allows for a more intuitive and easily interpretable visualization of the sensor function.

Particularly, such a shape can provide a clear and continuous representation of the angular position, making it easier for operators to quickly assess the status and position of the swivel actuator. Additionally, the circular or ring-shaped display can enhance the aesthetic appeal and ergonomic design of the sensor, contributing to a more user-friendly interface. This geometric configuration also facilitates the integration of multiple light sources around the display, improving visibility and ensuring that the sensor function is clearly communicated in various lighting conditions and environments.

In a further advantageous embodiment of the inventive sensor or method, the device has at least one light guide structure that is configured to guide light from at least the first light source and/or the second light source to the display of the device.

Preferably, the first light source and the second light source are spatially separated. By positioning the light sources at different locations, the display can more effectively differentiate between various sensor functions or states. This can lead to clearer and more distinct visual indications. Thereby, it is particularly preferred, if the spatial arrangement of the respective first and second light source correlates with the angular position of the actuator.

The term "light source" as used herein preferably refers to a device capable of emitting light, such as a Light Emitting Diode (LED) or similar technology. This light source is designed to provide illumination for the purpose of displaying sensor functions or values. It is important to note that while various types of light sources can be utilized, the preferred embodiments do not include RGB (Red, Green, Blue) light sources.

This is of particular advantage, in that the inclusion of at least one light guide structure ensures efficient and directed illumination of the display. By guiding light from the first or second light source to the display, the light guide structure enhances the clarity and brightness of the displayed sensor function. This results in improved visibility and readability of the sensor information, even in challenging lighting conditions. Additionally, the light guide structure can help to evenly distribute light across the display, preventing hotspots and ensuring a uniform appearance. In accordance with the present invention, in a particularly preferred embodiment any number of light sources 1-n, i.e. any at least one first and/or at least one second light source may be coupled into the display element at the same or different locations. This feature not only improves the functionality and user experience but also contributes to the overall reliability and effectiveness of the sensor in various industrial applications.

In a further advantageous embodiment of the inventive sensor or method, the light guide structure comprises at least one dome and/or a reflection surface.

This is of particular advantage, in that the inclusion of at least one dome and/or a reflection surface within the light guide structure significantly enhances the efficiency and directionality of the light transmission. The dome can focus and direct the light more precisely, while the reflection surface ensures that the light is evenly distributed across the display.

Particularly, the dome may be advantageously configured to couple the display light from light sources into the device. Thereby, to guide it to the display the light guiding structure may be bounded by reflection surfaces.

This combination improves the overall brightness and clarity of the displayed sensor function, making it easier for operators to read and interpret the information. Additionally, these features help to minimize light loss and maximize the effectiveness of the light sources, contributing to a more reliable and efficient sensor performance in various industrial environments.

This is of particular advantage, in that coupling the display light directly into the device without the need for a light guide simplifies the design and reduces potential points of failure. This direct coupling ensures that the light reaches the display more efficiently, enhancing the brightness and clarity of the displayed sensor function. Additionally, this approach can reduce manufacturing costs and complexity, making the sensor more cost-effective and easier to produce.

Optionally, the sensor can incorporate any number of light sources coupled into the device at different locations. This flexibility allows for more versatile and customizable lighting configurations, ensuring that the display can be adapted to various operational requirements and environmental conditions. By positioning multiple light sources strategically, the sensor can provide more comprehensive and evenly distributed illumination, further improving the visibility and readability of the sensor function. This adaptability enhances the overall functionality and user experience, making the sensor suitable for a wide range of industrial applications.

In a further advantageous embodiment of the inventive sensor or method, the first light source and/or the second light source are arranged on a printed circuit board. Thereby, the first light source and the second light source may be arranged spatially on one joint or on several separated printed circuit boards. Preferably, the spatial arrangement of the respective first and second light source correlates with the angular position of the actuator. This is of particular advantage because mounting the light sources on a PCB ensures precise positioning and reliable electrical connection, thereby simplifying assembly and improving robustness. The light sources may be arranged on one common printed circuit board or on several separate printed circuit boards. Using a joint PCB allows a compact design, reduces component count, and guarantees a fixed relative position of the light sources, which minimizes angular misalignment and facilitates correlation with the actuator's reference axis. It also simplifies wiring and sealing, which is beneficial for achieving high protection classes. Alternatively, arranging the light sources on separate PCBs provides greater flexibility in adapting to complex actuator geometries, enables modular scalability for additional light sources, and improves thermal management by distributing heat dissipation. Furthermore, separate boards allow easier replacement of individual modules in case of failure, reducing maintenance costs. In both alternatives, the spatial arrangement of the respective light sources preferably correlates with the angular position of the actuator, so that the visual indication on the display intuitively reflects the mechanical position, thereby enhancing operational safety and reducing interpretation errors.

In a further advantageous embodiment of the inventive sensor or method, the device is configured to control the first light source and the second light source independently of each other.

This is of particular advantage, in that the ability to control the first light source and the second light source independently of each other provides greater flexibility and functionality. This independent control allows for more precise and varied display options, enabling the sensor to convey different types of information simultaneously or sequentially. For example, one light source could indicate the current position of the swivel actuator, while the other could signal an alert or status change. This feature enhances the sensor's versatility, making it more adaptable to different operational requirements and improving the overall user experience. Additionally, independent control of the light sources can help in optimizing power consumption and extending the lifespan of the light sources, contributing to the sensor's efficiency and reliability in various industrial applications.

In a further advantageous embodiment of the inventive sensor or method, the device is configured to display the sensor function as a point area on the display.

This is of particular advantage, in that displaying the sensor function as a point area on the display allows for precise and focused visualization of specific sensor values. This pinpoint accuracy can help operators quickly identify and interpret critical information, such as the exact position of a swivel actuator. By highlighting specific areas, the display can provide a clear and immediate indication of important data, reducing the likelihood of misinterpretation and enhancing operational efficiency.

Additionally, this focused display method can be particularly useful in environments where space is limited or where multiple sensor functions need to be monitored simultaneously. It allows for a more compact and organized presentation of information, making it easier for operators to manage and respond to various system conditions. This feature enhances the overall usability and effectiveness of the sensor, contributing to improved performance and reliability in industrial applications.

For example, in a swivel angle position display, the display may be ring-shaped, providing a clear and continuous representation of the angular position. If the sensor function is displayed as a point area on the display, the valve position may be directly indicated by an LED, which lights up at a specific point on the ring to show the current position.

Additionally, one could enhance this setup by adding another light point exactly 180° offset from the first. This configuration allows for immediate and unambiguous visualization of the valve position, as operators can easily see the position from multiple angles. This dual-point indication ensures that the valve's status is always clearly visible, improving the accuracy and efficiency of monitoring and control in industrial applications.

In a further advantageous embodiment of the inventive sensor or method, the device is configured to display the sensor function as two point areas on the display, wherein the two point areas are arranged on a ring-shaped geometry and are positioned opposite each other.

By utilizing two distinct point areas, the device can clearly indicate different statuses such as "open," "closed," or any other intermediate status. This dual-point arrangement allows for a straightforward and unambiguous representation of the sensor function, reducing the likelihood of misinterpretation. The opposite positioning of the point areas facilitates quick recognition of the sensor status, allowing users to easily identify the current state of the actuator at a glance, thereby improving operational efficiency and response times. Particularly, this configuration allows for the most straightforward indication of an "open" status, a "closed" status, or any other status. Thereby, preferably the position and/or the colour and/or the illumination status of the two point areas is indicative for the sensor function, particularly for the detected sensor value. For example, the colour may be indicative for the status, such as "open" status indicated by green colour or "closed status" indicated by red colour. Alternatively or additionally the position of the point areas may indicate a valve angle. Alternatively or additionally, the illumination status, such as a movement of the point areas may indicate, if the sensor function is currently statically, i.e. in a stable position, or changing, i.e. currently changing from a first status, e.g. open, to a second status, e.g. closed.

In a further advantageous embodiment of the inventive sensor or method, the device is configured to display the sensor function as at least one point area on the display, and wherein the sensor function is the position and/or status of one port of a valve, and wherein preferably the position and/or the colour and/or the illumination status of each the at least one point area is indicative for the sensor function of each port, of the valve, respectively.

This way, a clear and intuitive visual representation of the status of each port of a more way valve can be advantageously achieved, making it easier for users to understand the current operational state at a glance. This is particularly useful for a more way valve, e.g. a three-way valve, where the precise control and monitoring of multiple ports are crucial. By using distinct point areas with varying positions, colors, and/or illumination statuses, the device can effectively convey detailed information about each port's status, such as whether it is open, closed, or in an intermediate position, or even currently closing or opening or changing into any other position.

In a further advantageous embodiment of the inventive sensor or method, the device is configured to display the sensor function as at least one sectional area on the display.

This is of particular advantage, in that displaying the sensor function as at least one sectional area on the display allows for a more detailed and segmented visualization of the sensor data. This sectional display can highlight specific ranges or zones of the sensor function, such as different angular positions of a swivel actuator. By dividing the display into sections, operators can quickly and easily identify the status and position within a particular range, enhancing the clarity and interpretability of the information.

Moreover, this approach can be particularly useful in applications where monitoring multiple parameters or states is necessary. For example, different sections of the display can be used to indicate various operational states, such as normal operation, warning, or fault conditions. This segmented visualization helps in providing a comprehensive overview of the system's status at a glance, improving decision-making and response times. Overall, this feature enhances the functionality, usability, and effectiveness of the sensor in diverse industrial environments.

For example, in a sensor with a ring-shaped display, the display may be divided into sectional areas that correspond to different swivel angle positions. These sectional areas are illuminated by separately controlled light sources.

Preferably the position and/or the colour and/or the illumination status of the at least one sectional area is indicative for the sensor function, particularly for the detected sensor value.

In practice, this means that each light source can independently illuminate a specific section of the ring-shaped display, representing a particular angular position of the swivel actuator. For instance, if the swivel actuator is at a 45-degree angle, the corresponding section of the display will light up, clearly indicating this position to the operator.

This sectional illumination provides a detailed and segmented visualization of the swivel angle, making it easier for operators to quickly assess the exact position of the swivel actuator.

In a further advantageous embodiment of the inventive sensor or method, the device is configured to display the sensor function as a full-surface area on the display.

This is of particular advantage, in that by utilizing the entire display sur face, the sensor can present information in a more detailed and expansive manner, ensuring that all relevant data is clearly visible to the operator. This full-surface display can enhance the readability and understanding of the sensor function, reducing the likelihood of misinterpretation and improving overall operational efficiency.

Furthermore, a full-surface display allows for the integration of additional information and indicators, such as status alerts, operational parameters, and real time updates. This holistic approach to displaying sensor data can significantly improve the monitoring and control capabilities of the system, making it easier for operators to make informed decisions and respond promptly to any changes or issues.

In a further advantageous embodiment of the inventive sensor or method, the device is configured to display the sensor function as combination of a full-surface area and at least one point area on the display, preferably two point areas arranged on a ring-shaped geometry and positioned opposite each other.

This is particularly advantageous, as it allows for a more comprehensive and versatile display of the sensor function. By combining a full-surface area with at least one point area on the display, the device can provide several, and thus more detailed, specific information simultaneously. The inclusion of two point areas arranged on a ring-shaped geometry and positioned opposite each other further improves the clarity and distinctiveness of the displayed information. This configuration also ensures that critical status indicators are easily visible from multiple angles, reducing the likelihood of misinterpretation.

In a further advantageous embodiment of the inventive sensor or method, the device, preferably the display, has a first display area with a ring-shaped geometry and a second display area arranged within the first display area.

This is of particular advantage, in that having a first display area with a ring-shaped geometry and a second display area arranged within the first display area allows for a more organized and layered presentation of information. The ring-shaped outer display can provide a continuous and intuitive visualization of the primary sensor function, such as the angular position of a swivel actuator.

Meanwhile, the inner display area can be used to present additional, complementary information, such as status indicators, operational parameters, or alert, or vice versa.

This dual-display configuration enhances the clarity and usability of the sensor by segregating different types of information into distinct, easily recognizable areas.

In a further advantageous embodiment of the inventive sensor or method, within the ring-shaped display, further information can be displayed using various technologies such as an LCE display, dot matrix, or analog display. This inner display area can provide dynamic and detailed information, where elements may rotate to indicate different statuses or parameters. Additionally, this area can incorporate interactive features such as a push button or a teach button for parameterization and configuration purposes.

In a further advantageous embodiment of the inventive sensor or method, the device is configured to vary the display of the sensor function on the display by means of at least the first light source and/or the second light source in their spatial arrangement and/or temporal sequence.

This is of particular advantage, in that the ability to vary the display of the sensor function by means of at least the first light source and/or the second light source in their spatial arrangement and/or temporal sequence provides enhanced flexibility and functionality. The sensor, with its separately controlled light sources, can vary in location and time to display a flashing light or a flashing light sequence. This feature can be used as a warning, function, or operation indication, making it easier for operators to quickly identify and respond to different system states.

Additionally, the light sources can vary in location and time to display a running light, which can also serve as a warning, function, or operation indication. This dynamic display capability ensures that critical information is communicated effectively and promptly.

Furthermore, the light sources can be configured to display a counting function via circular or row-wise fading in or out. This can be particularly useful as a stopwatch for a touch or teach function on the control panel and push button, providing operators with precise timing information and enhancing the overall usability of the sensor.

In a further advantageous embodiment of the inventive sensor or method, the illumination status and/or the position and/or the colour is provided as a user output indicating a disturbance and/or malfunction of the sensor. This is particularly advantageous, as it allows for immediate and clear communication of any disturbances or malfunctions in the sensor system. By using the illumination status, position, and/or color as user outputs, the device can effectively alert users to issues in real-time. The use of visual indicators such as changes in illumination, position, or color thereby provides an intuitive and easily understandable method for conveying critical information. Users can quickly recognize and interpret these signals, reducing the likelihood of prolonged downtime or damage due to undetected malfunctions.

In a further advantageous embodiment of the inventive sensor or method, the illumination status is selected from the group comprising blinking, alternating and continuously illuminated.

By selecting the various forms of illumination status, the device can communicate a wide range of information through simple visual cues. Blinking illumination can be used to indicate urgent issues or malfunctions, drawing immediate attention to critical problems that require prompt action. Alternating illumination can signify transitional states or warnings, helping users to recognize conditions that may need monitoring or adjustment.

Continuously illuminated status can represent normal operation or stable conditions, providing reassurance that the system is functioning correctly.

All described embodiments of the invention have the advantage that they provide a significantly improved display of sensor functions. This includes enhanced visualization through a pinpoint illuminated display area for swivel angle positions, which allows for precise and focused indication of specific sensor values.

Additionally, the segmented illuminated display area for swivel angle ranges offers a detailed and organized presentation of different angular positions, making it easier for operators to interpret the data.

Furthermore, the option to use a fully illuminated display area provides a comprehensive and easily readable visualization of the sensor function, ensuring that all relevant information is clearly visible. The ability to vary the illuminated area through flashing light, running light, or counting functions adds dynamic and flexible display options, which can serve as warnings, operational indicators, or timing functions. These features collectively enhance the usability, reliability, and effectiveness of the sensor in various industrial applications, ensuring that operators have access to clear, dynamic, and actionable information.

### Brief Description of the Drawings

The present invention will be described in further detail with reference to the drawings from which further features, embodiments and advantages may be taken, and in which:
FIG 1 illustrates a schematic representation of the sensor according to a first inventive embodiment;
FIG 2 illustrates a schematic exploded view of the sensor according to the first inventive embodiment;
FIG 3 illustrates a schematic side view of the sensor according to the first inventive embodiment;
FIG 4A and FIG 4B illustrate a schematic cross-sectional view of the sensor according to the first inventive embodiment;
FIG 4B and FIG 4C illustrate a schematic cross-sectional view of the sensor according to a second inventive embodiment;
FIG 5 illustrates a schematical view of a ring-shaped display of the sensor according to the first inventive embodiment;
FIG 6 illustrates a schematical view of a ring-shaped display of the sensor according to the first inventive embodiment, displaying the sensor function as a point area on the display;
FIG 7 illustrates a schematical view of a ring-shaped display of the sensor according to the first inventive embodiment, displaying the sensor function as a sectional area on the display;
FIG 8 illustrates a schematical view of a ring-shaped display of the sensor according to the first inventive embodiment, displaying the sensor function as a full-surface area on the display.

In the embodiments shown in the figures, elements similar or identic in function are designated with like reference signs. It is noted, that the figures may not be true to scale with respect to each other.

### Detailed Description

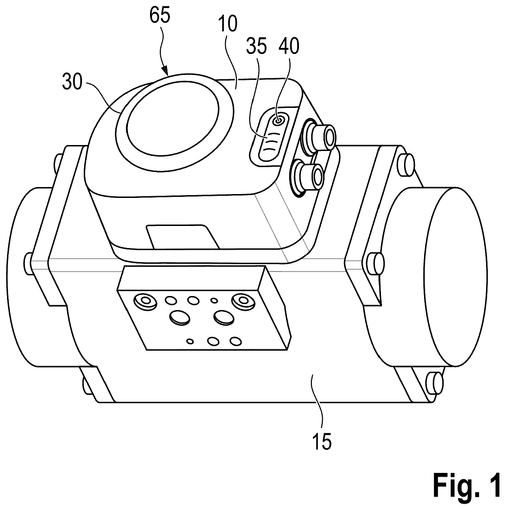

FIG 1 illustrates a schematic representation of the sensor according to a first inventive embodiment. The sensor 10 is particularly suitable for detecting an angular position of a swivel actuator 15 and comprises a device 30 for displaying a sensor function, particularly the detected sensor value. The device 30 has at least one display 65 that is configured to display the sensor function using at least a first light source 45A and at least a second light source 45B.

In FIG 1, the sensor 10 is shown mounted on the swivel actuator 15. The sensor housing 10 securely encloses the sensor components, providing protection and stability. The display device 30 is prominently positioned on the sensor, allowing for clear visualization of the sensor functions.

Adjacent to the display device 30, the control panel 35 is integrated, offering easy access to various control features. The control panel 35 includes a push button and a teach button 40, which are used for parameterization and configuration of the sensor.

These buttons enable operators to interact with the sensor, adjust settings, and perform necessary calibrations.

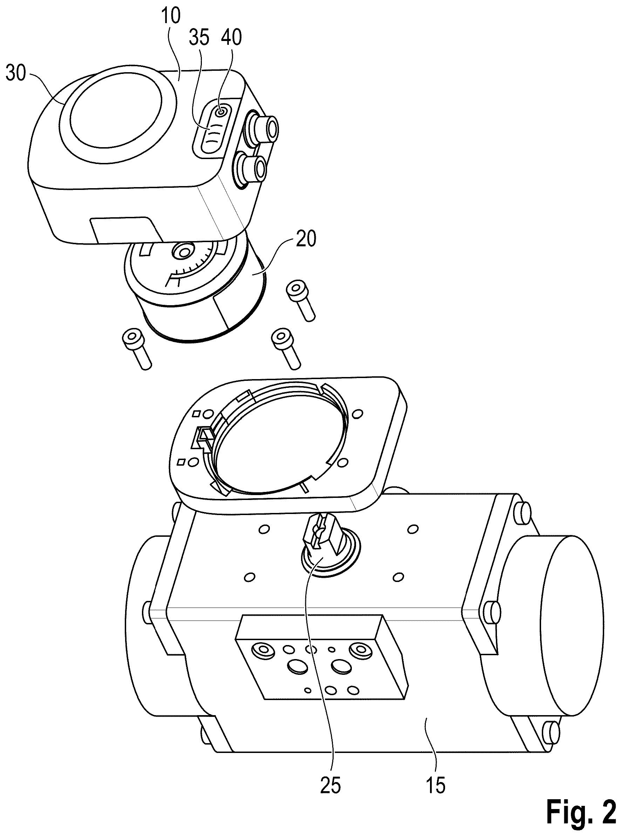

FIG 2 illustrates a schematic exploded view of the sensor according to the first inventive embodiment, showing the sensor 10 mounted on the swivel actuator 15.

Here it can be seen that the sensor 10 with its housing houses all the internal components and provides protection. The swivel actuator 15 is responsible for the rotational movement and is connected to the sensor 10 to detect the angular position. The sensor 10 comprises an actuator 20 mounted on the actuator shaft 25 for transmitting the angular position. The actuator shaft 25 is part of the swivel actuator 15.

In the exploded view of FIG 2 it can be seen that the sensor housing 10 encloses the actuator 20 and actuator shaft 25, while the display device 30, the push button 40 and control panel 35 are mounted on the exterior for easy access and visibility.

With this configuration, the sensor 10 may display the sensor function as the detected sensor value, and particularly the angular position of the swivel actuator 15.

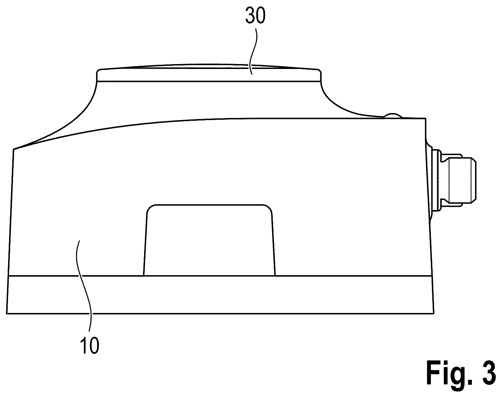

From FIG 2 and FIG 3 it can be seen that the sensor 10 according to the present invention comprises the device 30 having a flat and ring-shaped display 65.

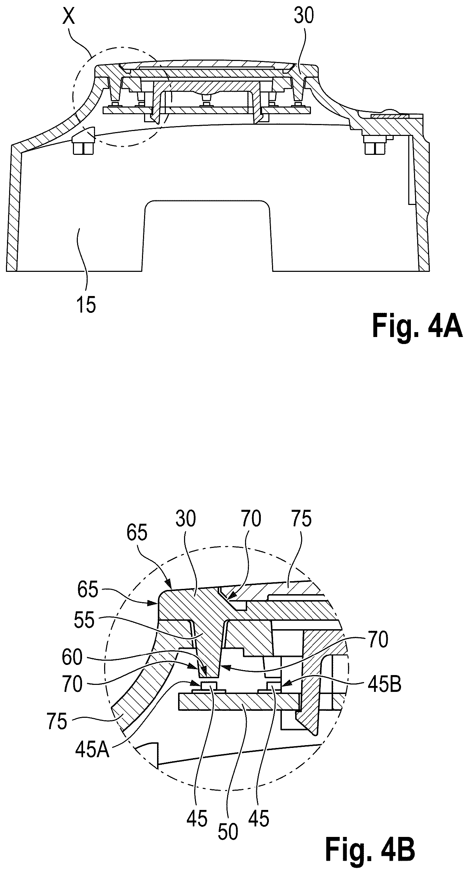

In FIG 4A, a schematic cross-sectional view of the sensor 10 according to the first inventive embodiment is illustrated. The display device 30 is shown, which visualizes various sensor functions. The housing wall 75 provides structural support and protection for the internal components. Light from the light sources 45, 45A, 45B is coupled into the display device 30 through the coupling surface 60.

The electronic board 50 contains the electronics that control the sensor and the light sources 45, 45A, 45B. In the shown embodiment the Light sources are LEDs that are mounted on the electronic board 50. Within the display device 30, the reflection surface 70 guides the light towards the display, 65, which also functions as a decoupling surface 65, where it is emitted and visualizes the sensor function to an operator.

FIG 4B provides a detailed view of the section "X" in FIG 4A. This detailed view focuses on the interaction between the light sources 45, 45A, 45B, the coupling surface 60, and the reflection surface 70. It shows how light from the light sources 45 is directed into the display device 30 through the coupling surface 60. The reflection surface 70 then guides the light towards the display and decoupling surface 65, where it is emitted to display the sensor function. This detailed view highlights the specific light-guiding mechanisms within the sensor 10, demonstrating how the internal components work together to achieve the desired display functionality.

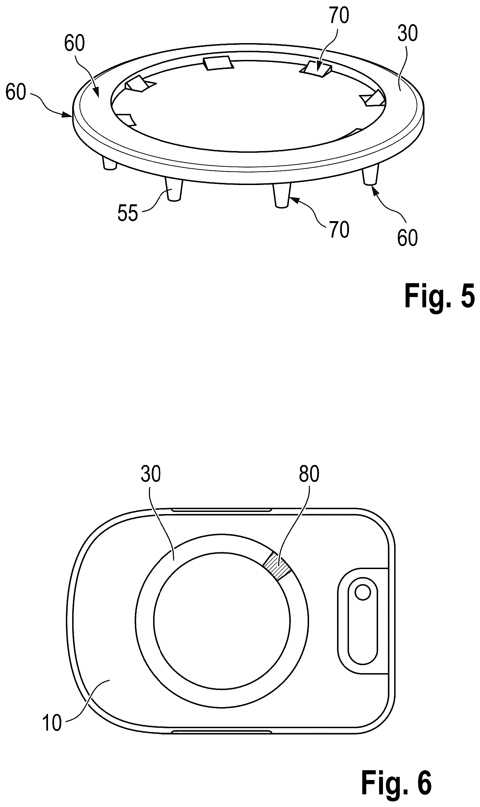

As can be seen from FIG 4A and 4B the device 30 of the sensor 10 comprises several light guide structures configured to guide light from the light sources 45, 45A, 45B to the display 65 of the device 30. Apparent from FIG 4B and FIG 5 that illustrates a schematical view of a ring-shaped display 65 of the sensor 10 according to the first inventive embodiment, the light guide structure comprises several domes 55.

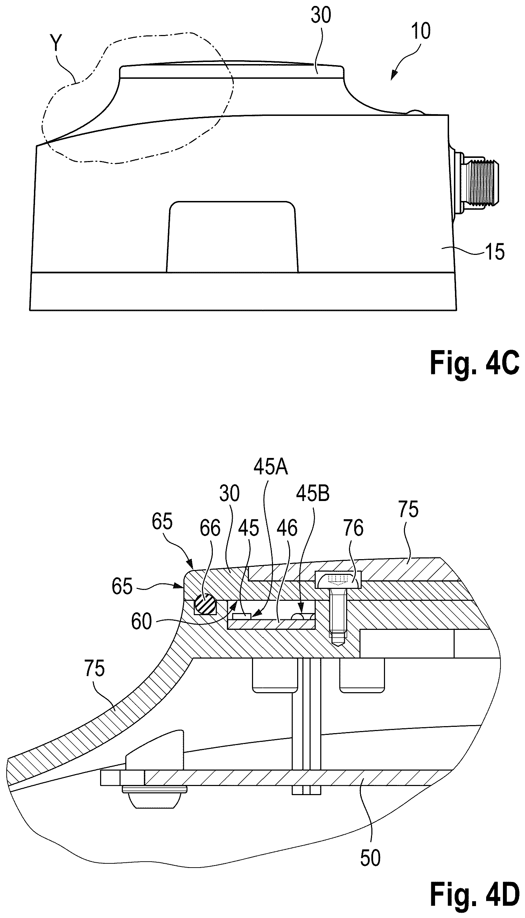

FIG. 4C and FIG. 4D each illustrate a schematic cross-sectional view of the sensor according to a second preferred embodiment. FIG 4D provides a detailed view of the section "Y" in FIG 4C. These figures correspond in their basic structure to the embodiment shown in FIG. 4A, but differ in that the first light source 45A and/or the second light source 45B are arranged on a printed circuit board 46. The light sources 45, 45A, 45B may be positioned either on a common printed circuit board 46 as shown in Fig. 4D, or, alternatively on several separate printed circuit boards 46. This arrangement ensures precise mechanical fixation and reliable electrical connection of the light sources. Preferably, the spatial arrangement of the respective first and second light source 45A, 45B correlates with the angular position of the actuator 15, so that the optical indication on the display surface 65 directly reflects the mechanical position of the actuator. In the shown embodiment of the sensor 10 a, the device 30 is configured to control the first light source 45A and the second light source 45B independently of each other, which allows for various realizations to display different sensor functions to the operator.

FIG 6 illustrates a schematical view of a ring-shaped display of the sensor according to the first inventive embodiment, displaying the sensor function as a point area 80 on the display 65.

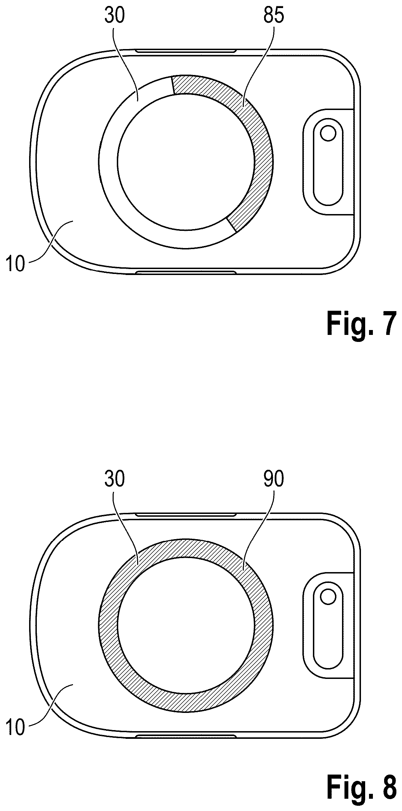

FIG 7 illustrates a schematical view of a ring-shaped display of the sensor according to the first inventive embodiment, displaying the sensor function as a sectional area 85 on the display 65.

FIG 8 illustrates a schematical view of a ring-shaped display of the sensor according to the first inventive embodiment, displaying the sensor function as a full-surface area 90 on the display 65.

The embodiments in the figures may relate to preferred embodiments, while all elements and features described in connection with embodiments may be used, as far as appropriate, in combination with any other embodiment and feature as discussed herein, in particular related to any other embodiment discussed further above.

The features of the present invention disclosed in the specification, the claims, examples and/or the figures may both separately and in any combination thereof be material for realizing the invention in various forms thereof.

### List of reference numerals

10 Sensor, Sensor housing
15 swivel actuator
20 actuator
25 actuator shaft
30 display Device
35 control panel
40 push button, Teach button
45, 45A, 45B Light source
46 LED princuit board
50 electronic board
55 light guide dome
60 coupling surface
65 decoupling surface, Emission surface
66 sealing element, O-ring
70 reflection surface
75 housing wall
76 fastening element, screw
80 point display area
85 segment display area
90 Full-surface display area

## Claims

1. A sensor (10) for detecting an angular position of an actuator (15), comprising a device (30) for displaying a sensor function, particularly the detected sensor value, wherein the device (30) has at least one display (65) that is configured to display the sensor function using at least a first light source (45A) and at least a second light source (45B), wherein preferably the sensor function is the detected sensor value, preferably the angular position of the actuator, and
wherein the light sources (45A, 45B) are substantially arranged radially around the rotational axis of the actuator (15) and/or the device (30), preferably the display (65), has a circular, ring-shaped, or partially circular geometry, or any arrangement around the rotational axis of the actuator (15).

2. Sensor (10) according to any of the preceding claims, wherein the device (30) has at least one light guide structure that is configured to guide light from at least the first light source (45A) and/or the second light source (45B) to the display (65) of the device (30), and/or wherein the first light source (45A) and the second light source (45B) are spatially separated, and wherein preferably the spatial arrangement of the respective first and second light source (45A, 45B) correlates with the angular position of the actuator.

3. Sensor (10) according to claim 1, wherein the first light source (45A) and/or the second light source (45B) are arranged on a printed circuit board (46), and wherein the first light source (45A) and the second light source (45B) are arranged spatially separated on the printed circuit board (46), and wherein preferably the spatial arrangement of the respective first and second light source (45A, 45B) correlates with the angular position of the actuator.

4. Sensor (10) according to any of the preceding claims, wherein the device (30) is configured to display the sensor function as a point area (80) on the display (65).

5. Sensor (10) according to any of the preceding claims, wherein the device (30) is configured to display the sensor function as two point areas (80) on the display (65), wherein the point areas (80) are arranged on a ring-shaped geometry and are positioned opposite each other, and wherein preferably the position and/or the colour and/or the illumination status of the two point areas (80) is indicative for the sensor function, particularly for the detected sensor value.

6. Sensor (10) according to any of the preceding claims, wherein the device (30) is configured to display the sensor function as at least one point area (80) on the display (65), and wherein the sensor function is the position and/or status of one port of a valve, and wherein preferably the position and/or the colour and/or the illumination status of each the at least one point area (80) is indicative for the sensor function of each port, of the valve, respectively.

7. Sensor (10) according to any of the preceding claims, wherein the device (30) is configured to display the sensor function as a full-surface area (90) on the display (65) or as at least one sectional area (85) on the display (65), and wherein preferably the position and/or the colour and/or the illumination status of the at least one sectional area (85) is indicative for the sensor function, particularly for the detected sensor value.

8. Sensor (10) according to any of the preceding claims, wherein the device (30) is configured to display the sensor function as combination of a full-surface area (90) and at least one point area (80) on the display (65), preferably two point areas (80) arranged on a ring-shaped geometry and positioned opposite each other.

9. Sensor (10) according to any of the preceding claims, wherein the device (30), prefer-ably the display (65), has a first display area with a ring-shaped geometry and a second display area arranged within the first display area.

10. Sensor (10) according to any of the preceding claims, wherein the device (30) is configured to vary the display of the sensor function on the display (65) by means of at least the first light source (45A) and/or the second light source (45B) in their spatial arrangement and/or temporal sequence.

11. Sensor (10) according to any of the preceding claims, particularly of claims 3 to 10, wherein the device (30) has at least one light guide structure that is configured to guide light from at least the first light source (45A) and/or the second light source (45B) to the display (65) of the device (30), and/or wherein the first light source (45A) and the second light source (45B) are spatially separated, and wherein preferably the spatial arrangement of the respective first and second light source (45A, 45B) correlates with the angular position of the actuator; and wherein the light guide structure comprises at least one dome (55) and/or a reflection surface (70).

12. Sensor (10) according to any of the preceding claims, wherein the device (30) is configured to control the first light source (45A) and the second light source (45B) independently of each other.

13. Sensor (10) according to any of claims 11 or 12, wherein the light guide structure comprises at least one dome (55) configured to couple the display light from at least the first light source (45A) and/or the second light source (45B) to the display (65) of the device (30).

14. Sensor (10) according to any of claims 11 to 13, wherein the light guide structure is configured and arranged to direct light from at least the first light source (45A) and/or the second light source (45B) the display device 30 through the coupling surface 60, and wherein the reflection surface 70 is configured and arranged to guide the light towards the display and decoupling surface 65.

15. Actuator (15) with a sensor (10) according to any of claims 1 to 14.

16. Method for detecting an angular position of an actuator (15) and displaying a sensor function with a sensor (10) comprising the steps
- a step of detecting a sensor value, preferably a current angular position of an actuator (15);
- a step of processing the detected sensor value and deriving a sensor function from processing the detected sensor value,
- a step of transmitting the sensor function of the detected sensor value, preferably by means of an actuator (20) mounted on an actuator shaft (25);
- a step of initiating a light signal from at least a first light source (45A) and/or a second light source (45B) to a display (65) of the device (30) to display the sensor function, preferably the detected sensor value, on the display (65), wherein the sensor (10) is preferably a sensor (10) according to any of claims 1 to 14.
